# EUROPÄISCHE PATENTANMELDUNG

(11) **EP 4 538 157 A1**
(43) Veröffentlichungstag der Anmeldung: **16.04.2025**
(21) Anmeldenummer: 23202788.8
(22) Anmeldetag: 10.10.2023
(51) Int. Cl.: B62K 3/00, B62K 15/00, B62K 21/24

(54) **VERFAHREN ZUM UMBAUEN EINES TRETROLLERS UND TRETROLLER**

(71) Anmelder: Puky GmbH & Co, KG, 42489 Wülfrath (DE)
(72) Erfinder: SCHRÖDER, Lisa, 42555 Velbert (DE); HERDICK, Christoph, 42553 Velbert (DE)
(74) Vertreter: Kluin Patent

(57) **Zusammenfassung**

Verfahren zum Umbauen eines Tretrollers (1) zwischen einem Benutzungs-Zustand (101), in welchem der Tretroller (1) fahrbereit ist, und einem TransportZustand (102), in welchem der Tretroller (1) platzsparend verstaubar ist, wobei der Tretroller (1) einen eine Standfläche (4) aufweisenden Rahmen (2) und eine einen Handgriff (5a, 5b) aufweisende Lenksäule (3) aufweist, mit den folgenden Schritten: Entriegeln einer zwischen der Lenksäule (3) und dem Rahmen (2) herleitbaren ersten Formschlussverbindung (11), welche die Lenksäule (3) gegenüber dem Rahmen (2) gegen ein Bewegen in axialer Richtung (A) und rotatorischer Richtung (B) blockiert, Herausführen und vollständiges Entnehmen der Lenksäule (3) von dem Rahmen (2), Verdrehen der Lenksäule (3) in einem Winkel von 180° in Umfangsrichtung (B), Einführen der Lenksäule (3) in eine am Rahmen (2) ausgebildete Einsteckhülse (6) und Verriegeln einer zwischen der Lenksäule (3) und dem Rahmen (2) herleitbaren zweiten Formschlussverbindung (12).

## Beschreibung

Die Erfindung betrifft ein Verfahren zum Umbauen eines Tretrollers zwischen einem Benutzungs-Zustand, auch fahrbereiter Zustand genannt, in welchem der Tretroller fahrbereit ist, und einem Transport-Zustand, in welchem der Tretroller platzsparend verstaubar ist. Ferner betrifft die Erfindung einen Tretroller, insbesondere zum Durchführen des vorgenannten Verfahrens.

Derartige Tretroller, auch nur Roller genannt, sind hinlänglich bekannt. So weisen Tretroller üblicherweise einen Rahmen mit einer Standfläche, auf der ein Benutzer beim Fahren mindestens einen Fuß abstellen kann, und eine Lenksäule mit mindestens einem Handgriff zum Lenken des Rollers auf. Lenksäule und Rahmen sind hierbei typischerweise in einem Winkel zwischen 60 und 90° zueinander angeordnet. Die Länge der Lenksäule lässt sich üblicherweise verstellen, um je nach Körpergröße des Benutzers ein ergonomisch angepasstes und angenehmes Bedienen des Tretrollers für den Benutzer zu ermöglichen. Solche Tretroller sind üblicherweise durch Muskelkraft des Benutzers angetrieben.

Ferner ist es bekannt, derartig Tretroller zu zerlegen oder umzubauen, um sie insbesondere für Transport- oder Aufbewahrungszwecke leichter verstauen zu können. Insbesondere die winklig zueinander und sich voneinander weg erstreckenden Längsteile, nämlich Rahmen und Lenksäule, benötigen einen relativ großen Platzbedarf und werden daher oftmals bei einem Verstauen des Tretrollers, wie zum Beispiel in einem Kofferraum, oder auch bei einem händischen Tragen des Rollers als störend empfunden. Es sind daher Tretroller bekannt, welche sich zum Zwecke des Verstauens oder Tragens umbauen lassen.

Hierbei sind zum einen Tretroller bekannt, bei denen die Lenksäule vom Rahmen abnehmbar ist. Lenksäule und Rahmen können sodann als Einzelteile separat verstaut werden. Trotz des Vorteils zum Verstauen oder Lagern, hat sich gezeigt, dass sich derartige Tretroller nicht komfortabel tragen lassen. Denn hierzu müssen stets zwei Teile getragen werden. Aufgrund der Abmaße typischer Roller kann dies in der Regel nicht mit einer Hand erfolgen, sondern nur mit beiden Händen. Dadurch wirken solche Roller zum Tragen unpraktisch.

Ferner sind Tretroller bekannt, bei denen zum Umbauen des Tretrollers von einem Benutzungszustand in einen Transportzustand - und umgekehrt - die Lenksäule um den Rahmen verschwenkt werden kann. Hierbei bleiben Lenksäule und Rahmen stets miteinander verbunden. Dadurch kann eine sehr praktische Einrichtung geschaffen sein, durch die sich der Tretroller leicht umbauen und einfach tragen lässt. Ferner ist das Risiko eines Verlusts eines der beiden Teile von Lenksäule und Rahmen, oder auch eines Verwechseln der beiden Teile beim Vorhandensein von mehreren gleichen Tretrollern minimiert bzw. praktisch unmöglich. Allerdings hat sich gezeigt, dass in dem Transportzustand zwischen Lenksäule und Rahmen ein nicht unerheblicher Abstand ist, der dazu führt, dass der Tretroller auch im Transportzustand relativ groß und platzintensiv ist, so dass zum Verstauen des Tretrollers ein entsprechend großer Platz erforderlich ist.

Aufgabe der vorliegenden Erfindung ist es daher, ein Verfahren zum Umbauen eines Tretrollers sowie einen solchen Tretroller bereitzustellen, bei denen zumindest einer der oben genannten Nachteile verbessert und insbesondere sowohl eine gute Transportfähigkeit als auch eine gute Verstaubarkeit ermöglicht ist.

Die Erfindung löst die gestellte Aufgabe durch ein Verfahren mit den Merkmalen des Hauptanspruchs sowie durch einen Tretroller mit den Merkmalen des Anspruchs 5. Vorteilhafte Ausgestaltungen und Weiterbildungen der Erfindung sind in den Unteransprüchen, der Beschreibung sowie den Figuren offenbart.

Das erfindungsgemäße Verfahren sieht vor, dass zum Umbauen des Tretrollers zwischen dem Benutzungs-Zustand und dem Transport-Zustand zunächst eine ersten Formschlussverbindung zwischen Lenksäule und Rahmen entriegelt wird. Die erste Formschlussverbindung blockiert insbesondere ein Bewegen der Lenksäule gegenüber dem Rahmen in axialer und rotatorischer Richtung der Lenksäule. Das bedeutet, die Lenksäule kann nicht in ihrer axialen Richtung von dem Rahmen abgehoben werden, und auch nicht in Umfangrichtung gegenüber dem Rahmen gedreht werden. Nach dem Entriegeln dieser ersten Formschlussverbindung ist es vorgesehen, dass die Lenksäule vom Rahmen abnehmbar ist. Dazu kann die Lenksäule aus einem Teil des Rahmens, insbesondere eine Einsteckhülse, herausgeführt und von dem Rahmen vollständig entnommen werden. Die Lenksäule und der Rahmen liegen nun als zwei separate Teile vor. Diese Teile können in dieser Form transportiert, gelagert oder wieder miteinander verbunden werden. Zum Verbinden der Teile, insbesondere zum Umbauen, wird die Lenksäule um 180° in Umfangsrichtung verdreht in denselben Teil des Rahmens, nämlich die oben genannte Einsteckhülse, eingeführt und eingesetzt, von dem sie entnommen wurde. Das heißt die Lenksäule wird um ihre axiale Längsachse verdreht wieder in die Einsteckhülse eingesetzt. Letztlich erfolgt ein Verriegeln einer zwischen der Lenksäule und dem Rahmen herleitbaren zweiten Formschlussverbindung. Die zweite Formschlussverbindung muss nicht der ersten Formschlussverbindung entsprechen. Insbesondere kann die zweite Formschlussverbindung durch zumindest teilweise andere Bauteile herleitbar sein. Dadurch kann der Tretroller im Transport-Zustand einerseits sowohl in zwei separaten Teilen ausgebildet sein, welches beispielsweise zum Verstauen in einem Kofferraum vorteilhaft ist, als auch zu einem zusammenhängenden Teil vereint sein, welches beispielsweise zum Tragen mit der Hand vorteilhaft ist.

Gemäß einer bevorzugten Ausgestaltung des Verfahrens ist es vorgesehen, dass das Entriegeln der Lenksäule von dem Rahmen durch ein Drücken eines Drück-Knopfs eines sich durch zumindest einen Befestigungsabschnitt der Lenksäule erstreckenden Hebelarms unter gleichzeitigem Zurückziehen einer in einer Aussparung des Rahmens eingreifenden Rastnase erfolgt. Dadurch ist eine besondere einfache und komfortable Handhabung der Entriegelung ermöglicht. Dieser Entriegelungsvorgang kann sowohl zum Entriegeln der ersten Formschlussverbindung als auch zum Entriegeln der zweiten Formschlussverbindung gelten.

Gemäß einer weiteren, bevorzugten Ausgestaltung des Verfahrens ist es vorgesehen, dass bei dem Verdrehen der Lenksäule die Lenksäule und der Rahmen berührungslos zueinander angeordnet sind. Das heißt, die Lenksäule kann frei und unabhängig vom Rahmen gehandhabt, insbesondere verstaut, gedreht oder getragen werden. Dadurch ist eine besonders komfortable Handhabung beim Umbauen des Tretrollers ermöglicht.

Gemäß einer weiteren, bevorzugten Ausgestaltung des Verfahrens ist es vorgesehen, dass beim Einführen der Lenksäule in die Einsteckhülse eine umfangsseitige Formschlussverbindung, insbesondere durch einen konturierten Querschnitt der Einsteckhülse und einer dazu korrespondieren ausgebildeten Außenkontur der Lenksäule, hergestellt wird. Dies kann automatisch erfolgen, indem die Lenksäule mit einem entsprechenden Abschnitt in den konturierten Querschnitt der Einsteckhülse eingeschoben wird. Der konturierte Querschnitt kann beispielsweise eine Längsnut umfassen. Die dazu korrespondieren ausgebildeten Außenkontur der Lenksäule kann beispielsweise eine hervorstehende Erhöhung sein. Die Erhöhung kann als Nutenstein in die Nut der Einsteckhülse eingreifen. Ferner kann die Erhöhung in der Nut geführt sein, insbesondere in axialer Richtung der Einsteckhülse. Dadurch ist eine besonders komfortable Handhabung beim Umbauen des Tretrollers ermöglicht.

Der erfindungsgemäße Tretroller, welcher bevorzugt zum Durchführen des voranstehenden Verfahrens geeignet ist, weist einen mit Standfläche versehenen Rahmen und eine mindestens einen Handgriff aufweisende Lenksäule auf. Die Lenksäule weist Befestigungsmittel zum Arretieren an dem Rahmen in mindestens einer ersten Position und einer zweiten Position auf. Erfindungsgemäß ist es vorgesehen, dass zum Überführen der Lenksäule von der ersten Position in die zweite Position die gesamte Lenksäule von dem Rahmen vollständig abnehmbar ist. Dadurch ist es möglich, die beiden Hauptkomponenten des Rollers, nämlich Rahmen und Lenksäule, beispielsweise zum Zwecke der Verstauung platzsparend anzuordnen. Ferner ist es möglich, die beiden Hauptkomponenten des Rollers beispielsweise zum Zwecke eines händischen Transports komfortabel und ergonomisch anzuordnen.

Der Tretroller kann sich bei Anordnung der Lenksäule an dem Rahmen in der ersten Position in einem Benutzungs-Zustand, in welchem der Tretroller fahrbereit ist, und bei Anordnung der Lenksäule an dem Rahmen in der zweiten Position in einem Transport-Zustand befinden, in welchem der Tretroller platzsparend verstaubar ist. Die erste Position ermöglicht ein Fahren des Rollers im BenutzungsZustand. Die zweite Position dient dem Transport oder einer Lagerung des Rollers. In dem Transport-Zustand ist der Tretroller nicht fahrbereit.

Vorzugsweise ist die Lenksäule in der ersten Position und in der zweiten Position formschlüssig mit dem Rahmen verbunden, insbesondere in einem axialen, radialen und umfangsseitigen Formschluss. Dadurch kann die Lenksäule in den beiden vorgenannten Positionen in axialer Richtung der Einsteckhülse, in radialer Richtung der Einsteckhülse und in Umfangsrichtung an der Einsteckhülse gegenüber dem Rahmen arretiert sein. Dadurch ist ein sicheres und komfortables Fahren des Tretrollers ermöglicht.

Besonders bevorzugt weist der Rahmen eine Einsteckhülse, auch Steckbuchse genannt, zur Aufnahme zumindest eines axialen Befestigungsabschnitts der Lenksäule auf, wobei die Lenksäule sowohl in der ersten Position als auch in der zweiten Position mit dem Befestigungsabschnitt in der Einsteckhülse angeordnet sein kann. Dadurch ist ein besonders platzsparender und kostengünstig herstellbarer Tretroller bereitgestellt. Dadurch ist eine besonders komfortable Handhabung beim Umbauen des Tretrollers ermöglicht.

Die Einsteckhülse kann einen runden oder eckigen Querschnitt aufweisen. Entsprechend kann die Lenksäule zumindest in einem in die Einsteckhülse einsteckbaren axialen Befestigungsabschnitt eine zu dem Querschnitt korrespondierende Außenkontur aufweisen. Beispielsweise weist die Einsteckhülse einen runden Querschnitt in Art eines Zylinders auf. An der runden Seitenwand kann in einem Bereich eine Vertiefung oder eine Erhöhung ausgebildet sein, in welche der Befestigungsabschnitt mit einer korrespondierende Außenkontur, wie einer Erhöhung oder Vertiefung eingreifen kann. Beispielsweise ist an der Seitenwand der Einsteckhülse eine Nut ausgebildet, welche als eine Vertiefung in radialer Richtung ausgebildet ist und sich in axialer Richtung der Einsteckhülse erstreckt. Der Befestigungsabschnitt kann entsprechend eine Erhöhung, wie eine axiale Flanke aufweisen, welche beim Einführen der Lenksäule in die Einsteckhülse in die Nut eingreifen kann. Vorteilhafterweise ist das an einem der beiden der Einsteckhülse und der Lenksäule angeordnete Konturelement an zwei gegenüberliegenden Seiten angeordnet und das an dem anderen der beiden der Einsteckhülse und der Lenksäule angeordnete Konturelement lediglich an einer Seite ausgebildet. Dadurch kann die Lenksäule sowohl zu Herstellung der ersten Position als auch zur Herstellung der zweiten Position mit dem Konturelement in das Konturelement der Einsteckhülse eingreifen. Dadurch ist eine besonders komfortable Handhabung beim Umbauen des Tretrollers ermöglicht.

Besonders bevorzugt weist die Einsteckhülse über ihre Längserstreckung mindestens zwei unterschiedlich ausgebildete Querschnitte und die Lenksäule über ihren axialen Befestigungsabschnitt mindestens zwei unterschiedliche, mit den Querschnitten korrespondierende Außenkonturen auf. Insbesondere weist die Einsteckhülse über ihre Längserstreckung in einem axialen ersten Bereich eine erste Querschnittsform, beispielsweise die vorgenannte runde Form mit Nut, und in einem axialen zweiten Bereich eine zweite Querschnittsform auf, beispielsweise einen eckigen Querschnitt, insbesondere in Form eines unregelmäßigen Innen-Achtkants. An dem Befestigungsabschnitt der Lenksäule kann entsprechend in einem axialen ersten Bereich eine erste Außenkontur, beispielsweise die vorgenannte runde Form mit einem hervorstehenden Pin oder einer hervorstehenden Flanke, und in einem axialen zweiten Bereich eine zweite Außenkontur ausgebildet sein, beispielsweise eine eckige Außenkontur, insbesondere in Form eines unregelmäßigen Außen-Achtkants. Der erste und/oder zweite Bereich kann jeweils als Schlüssel zum richtigen Einführen oder Einstecken der Lenksäule in die Einsteckhülse dienen. Ferner können insbesondere über den zweiten Bereich besonders hohe Kräfte übertragen werden. Dadurch ist ein sicheres und komfortables Fahren des Tretrollers ermöglicht.

Vorteilhafterweise kann die Einsteckhülse eine Öffnung aufweisen, welche in einer Ebene angeordnet ist, die zu einer Ebene der Standfläche in einem Winkel von etwa 45° angeordnet ist. Dadurch ist in dem Benutzungszustand eine relativ aufrecht vom Rahmen stehende Lenksäule und in dem Transportzustand eine besonders flach an dem Rahmen anliegende Lenksäule ermöglicht.

Für eine besonders komfortable Bedienung kann das Befestigungsmittel einen Hebelarm umfassen, welcher sich im Inneren der Lenksäule über mindestens die Länge eines axialen Befestigungsabschnitts der Lenksäule erstreckt, welcher sich sowohl im Benutzungszustand als auch im Transportzustand in einer Einsteckhülse des Rahmens befindet. Dadurch ist zum einen eine verbesserte Bedienbarkeit und zum anderen ein optisch ansprechendes Gehäuse der Lenksäule, insbesondere ohne hervorstehende oder mechanisch-anmutende Bauteile ermöglicht.

Das Befestigungsmittel weist bevorzugt eine Rastnase auf, welche zum Arretieren der Lenksäule an dem Rahmen in eine an dem Rahmen ausgebildete, korrespondierende Aussparung in Eingriff bringbar ist. Dadurch ist die Lenksäule in besonders einfacher und komfortabler Weise an dem Rahmen arretierbar. Ferner ist eine besonders platzsparende und materialarme Verbindung möglich, so dass insgesamt eine kostengünstige Herstellung des Tretrollers ermöglicht ist.

Besonders bevorzugt ist das Befestigungsmittel, insbesondere die Rastnase, mittels eines Vorspannelements, insbesondere einer Feder, vorgespannt, insbesondere in Richtung radial weg von der Lenksäule. Dadurch kann die Rastnase bei einem Überschneiden mit einer an dem Rahmen ausgebildeten Vertiefung automatisch in diese eingreifen. Die Feder kann hierbei das Vorschieben der Rastnase in die am Rahmen ausgebildete Vertiefung bewirken. Dadurch ist eine besonders komfortable Handhabung beim Umbauen des Tretrollers ermöglicht.

Die Lenksäule kann aus mehreren Abschnitten bestehen. Insbesondere kann die Lenksäule an einem dem Handgriff zugewandten distalen Ende einen ersten Säulenabschnitt und an einem dem Handgriff abgewandten distalen Ende einen zweiten Säulenabschnitt, insbesondere den Befestigungsabschnitt, aufwiesen. Der als Befestigungsabschnitt ausgebildete zweite Säulenabschnitt ist in Längserstreckung gegenüber dem ersten Säulenabschnitt bevorzugt in einem Winkel von etwa 45° angeordnet. Dadurch ist in dem Benutzungszustand eine relativ aufrecht vom Rahmen stehende Lenksäule und in dem Transportzustand eine besonders flach an dem Rahmen anliegende Lenksäule ermöglicht.

Besonders bevorzugt erstreckt sich zwischen dem ersten Säulenabschnitt und dem Befestigungsabschnitt zusätzlich ein dritter Säulenabschnitt, der auch als Knickabschnitt bezeichnet wird. Der Knickabschnitt verbindet den ersten Säulenabschnitt mit dem Befestigungsabschnitt. Der Knickabschnitt kann insbesondere den Winkel von etwa 45° zwischen dem ersten Säulenabschnitt und dem Befestigungsabschnitt ausbilden. Dadurch ist ein optisch besonders ansprechendes Gehäuse der Lenksäule ermöglicht. Das Befestigungsmittel erstreckt sich bevorzugt auch über den Knickabschnitt. Dadurch ist eine besonders komfortable Handhabung beim Umbauen des Tretrollers ermöglicht.

Nachfolgend wird ein Ausführungsbeispiel der Erfindung anhand der Figuren näher erläutert. Gleiche Bezugszeichen bezeichnen gleiche Komponenten. Es zeigen schematisch:
Figur 1a - eine perspektivische Darstellung eines erfindungsgemäßen Tretrollers in einem Benutzungs-Zustand;
Figur 1b - eine perspektivische Darstellung des Tretrollers gemäß Fig.1a in einem Transport-Zustand;
Figur 2 - eine Schnittdarstellung des Tretrollers gemäß Fig.1a;
Figur 3 - eine Schnittdarstellung des Tretrollers gemäß Fig.1a mit gedrücktem Befestigungsmittel in einer zweiten Position;
Figur 4 - eine Schnittdarstellung des Tretrollers gemäß Fig.1a mit gedrücktem Befestigungsmittel in einem Umbau-Zustand;
Figur 5 - eine Schnittdarstellung des Tretrollers gemäß Fig.4 mit nichtgedrücktem Befestigungsmittel;
Figur 6 - eine Schnittdarstellung des Tretrollers gemäß Fig.1a mit nichtgedrücktem Befestigungsmittel in einem Umbau-Zustand in verdrehter Position;
Figur 7 - eine Schnittdarstellung des Tretrollers gemäß Fig.6 mit gedrücktem Befestigungsmittel;
Figur 8 - eine Schnittdarstellung des Tretrollers gemäß Fig.6 mit gedrücktem Befestigungsmittel in einer ersten Position;
Figur 9 - eine Schnittdarstellung des Tretrollers gemäß Fig.6 in einem Benutzungs-Zustand;
Figur 10 - eine perspektivische Detaildarstellung eines Rahmens und einer Lenksäule des Tretrollers gemäß Fig.1a;
Figur 11 - eine perspektivische Detaildarstellung des Rahmens des Tretrollers gemäß Fig.1a; und
Figur 12 - eine perspektivische Detaildarstellung des Rahmens und der Lenksäule des Tretrollers gemäß Fig.1a.

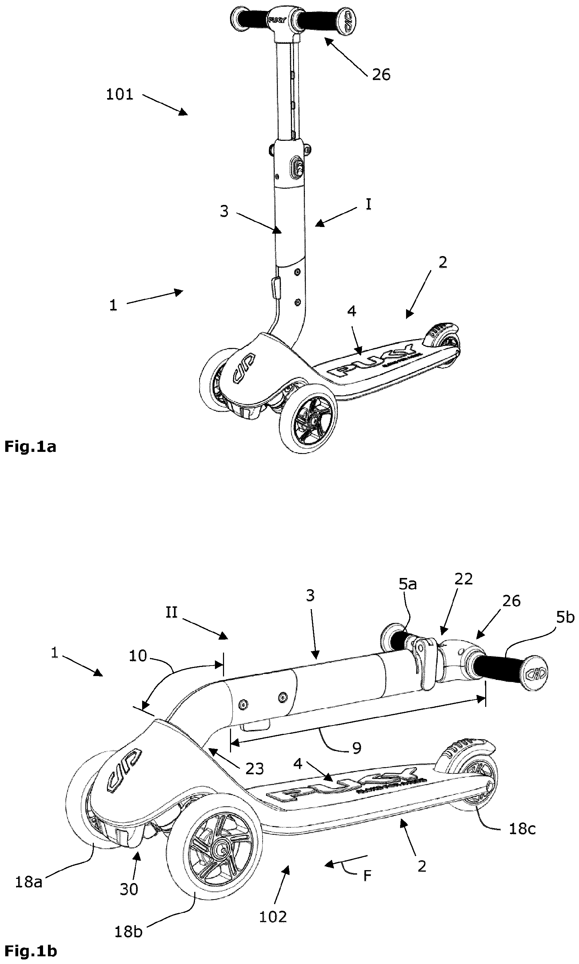

In den Figuren ist mit dem Bezugszeichen 1 jeweils ein erfindungsgemäßer Tretroller gekennzeichnet. In Figur 1a ist der Tretroller 1 in einem Benutzungs-Zustand 101 gezeigt, in welchem der Tretroller 1 zum Fahren benutzt werden kann. In Figur 1b ist der Tretroller 1 in einem Transport-Zustand 102 gezeigt, in welchem der Tretroller 1 platzsparend verstaubar ist oder ergonomisch getragen werden kann. Der Tretroller 1 ist im Wesentlichen gebildet durch einen Rahmen 2 und eine Lenksäule 3. Der Rahmen umfasst eine Standfläche 4 sowie vorliegend drei Räder 18a, 18b, 18c, auf denen der Tretroller 1 auf einer Straße aufliegen kann. Zur Erhöhung der Stabilität sind vorliegend zwei Vorderräder 18a, 18b und ein bremsbares Hinterrad 18c vorgesehen. Der Rahmen 4 kann aus Kunststoff hergestellt sein. An einem in Fahrtrichtung F vorderen Ende des Rahmens 4 ist eine Lenkmechanik 30 angeordnet, mittels derer der Tretroller 1 durch Verschwenken der Vorderräder 18a, 18b gelenkt werden kann.

Die Lenksäule 3 ist im gezeigten Transport-Zustand 102 in Längserstreckung im Wesentlichen parallel zu dem Rahmen 2, insbesondere etwas beabstandet von der Standfläche 4, angeordnet. An einem dem Rahmen 2 abgewandten distalen ersten Ende 22 der Lenksäule 3 ist eine Lenkstange 26, oder auch nur Lenker genannt, angeordnet, an dem zwei Handgriffe 5a, 5b angeordnet sind. Freilich kann der Tretroller 1 alternativ auch als sogenannter Einhand-Roller ausgebildet sein, bei dem nur ein einziger Handgriff 5a unmittelbar an der Lenksäule 3 angeordnet ist.

An einem dem Rahmen 2 zugewandten distalen zweiten Ende 23 der Lenksäule 3 weist diese Befestigungsmittel 16 zum Arretieren der Lenksäule 3 an dem Rahmen 2 auf. Vorliegend ist der Transport-Zustand 102 gezeigt, bei dem die Lenksäule 3 in einer zweiten Position II an dem Rahmen 2 angeordnet ist. Um den Tretroller 1 benutzen zu können, insbesondere zum Fahren in einer Hauptfahrtrichtung F, ist es erforderlich, die Lenksäule 3 aus der zweiten Position II in eine erste Position I zu verbringen, in der die Lenksäule 3 im Wesentlichen senkrecht zu der Standfläche 4 angeordnet ist, so dass der Benutzer mit mindestens einem Fuß auf der Standfläche 4 stehen kann und mit den Händen die Handgriffe 5a, 5b umgreifen kann. Dieser in Figur 1a gezeigte Zustand wird vorliegen BenutzungsZustand 101 genannt, in welchem der Roller 1 fahrbereit ist. Der Zustand dazwischen, insbesondere wenn die Lenksäule 3 vom Rahmen 2 entfernt ist, wird vorliegend UmbauZustand 100 genannt.

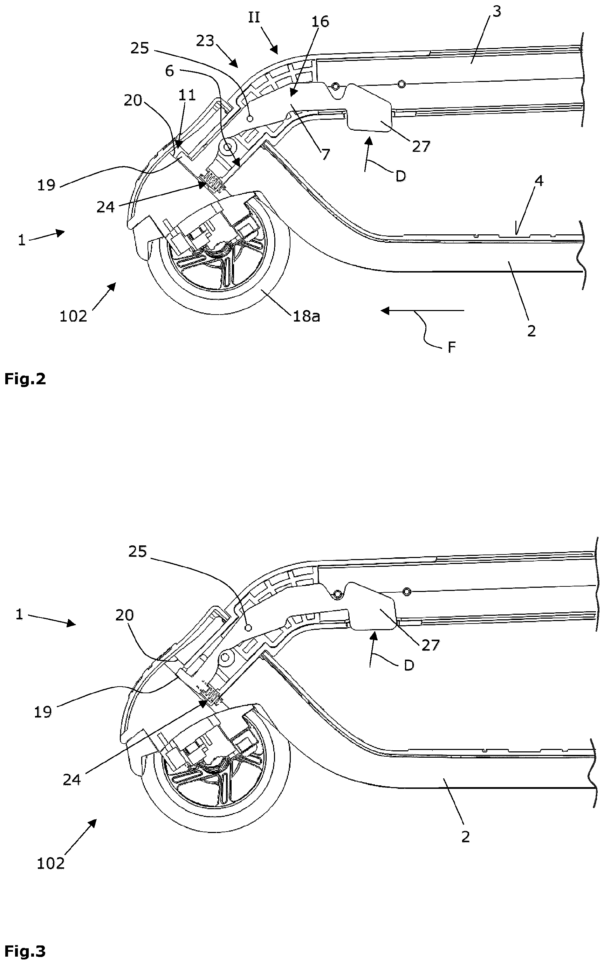

Der Umbau von dem Transport-Zustand 102 bzw. von der zweiten Position II in den Benutzungs-Zustand 101 bzw. die erste Position I ist in einzelnen Schritten in den Figuren 2 bis 9 gezeigt. Diese Schritte umfassen in Kurzform ein Entriegeln einer zwischen der Lenksäule 3 und dem Rahmen 2 herleitbaren ersten Formschlussverbindung 11, welche die Lenksäule 3 gegenüber dem Rahmen 2 gegen ein Bewegen in zumindest axialer Richtung A blockiert, ein Herausführen und vollständiges Entnehmen der Lenksäule 3 von dem Rahmen 2, ein Verdrehen der Lenksäule 3 in einem Winkel von 180° in Umfangsrichtung B, ein Einführen der Lenksäule 3 in eine am Rahmen 2 ausgebildete Einsteckhülse 6 und ein Verriegeln einer zwischen der Lenksäule 3 und dem Rahmen 2 herleitbaren zweiten Formschlussverbindung 12. Im Einzelnen:
Wie in der seitlichen Schnittdarstellung in Figur 2 erkennbar ist, umfasst die Lenksäule 3 einen Befestigungsabschnitt 8, einen Säulenabschnitt 9 sowie eine die beiden Abschnitte 8 und 9 verbindenden Knickabschnitt 10.

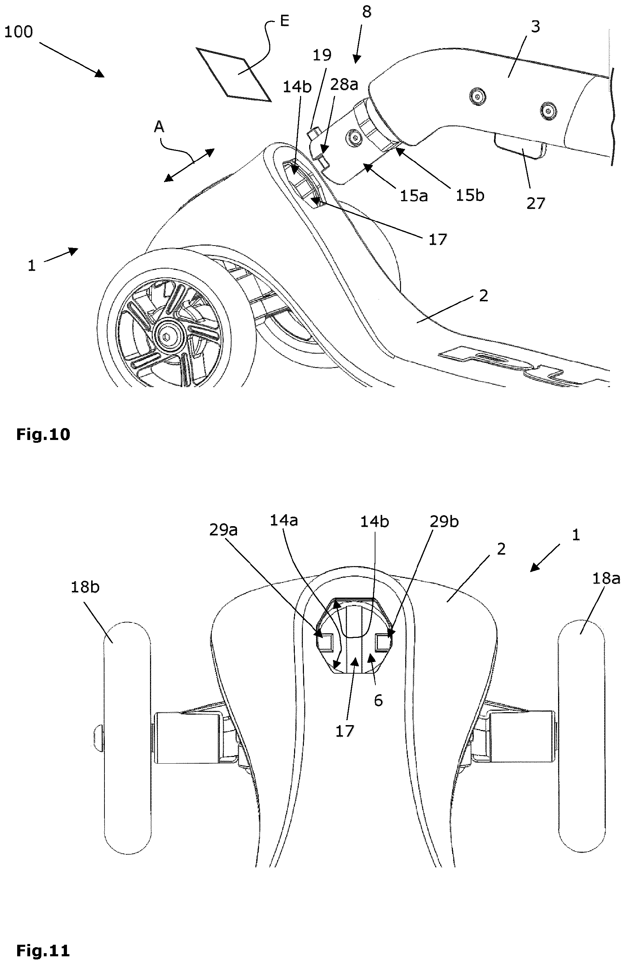

Die Lenksäule 3 befindet sich vorliegend mit dem Befestigungsabschnitt 8 in der Einsteckhülse 6 des Rahmens 2. Der Befestigungsabschnitt 8 ist durch den rahmenseitig angeordneten Endabschnitt der Lenksäule 3 gebildet und dient zum Befestigen der Lenksäule 3 an dem Rahmen 2. Dazu kann der Befestigungsabschnitt 8 insbesondere vollständig in die Einsteckhülse 6 eingesetzt sein. Der Befestigungsabschnitt 8 ist zu dem Säulenabschnitt 9 in Längserstreckung der Lenksäule 3 in einem Winkel von etwa 45° ausgebildet. Die Einsteckhülse 6 weist eine Öffnung 17 auf, durch welche sich die Lenksäule 3 erstreckt. Die Öffnung 17 ist in einer Ebene E angeordnet, welche zu der Standfläche 4 in einem Winkel von etwa 45° angeordnet ist. Die in der Einsteckhülse 6 befindliche Lenksäule 3 ist durch das Befestigungsmittel 16 an dem Rahmen 2 arretiert, insbesondere gegen ein axiales Herausbewegen in Richtung A blockiert. Ein Fixieren der Lenksäule 3 in radialer Richtung G ist durch die Formgebung der Einsteckhülse 6, insbesondere als zylindrische Form, und einer entsprechenden Außenkontur 15a, 15b des Befestigungsabschnitt 8 gegeben. Ein Blockieren eines Verdrehens der Lenksäule 3, insbesondere in Umfangrichtung B der Lenksäule 3, ist ebenfalls durch eine Formgebung der Einsteckhülse 6 sowie der Außenkontur 15a, 15b des Befestigungsabschnitt 8 gegeben, welches in Figuren 10 bis 12 im Detail gezeigt ist.

In Figur 2 ist erkennbar, dass das Befestigungsmittel 16 als Hebelarm 7 ausgebildet ist, welcher sich durch den gesamten Befestigungsabschnitt 8 erstreckt. An dem zweiten Ende 23 der Lenksäule 3 umfasst der Hebelarm 7 eine Rastnase 19, welche in einer ersten Aussparung 20 der Einsteckhülse 6 eingreift. Durch diese erste Formschlussverbindung 11 ist die Lenksäule gegen eine axiales - und vorliegend zusätzlich auch rotatorisches - Bewegen gesichert. Die Rastnase 19 ist mittels einer Feder 24 in Richtung radial weg von der Lenksäule 3 vorgespannt, so dass die Rastnase 19 automatisch in die Aussparungen 20, 21 eingreifen kann. Der Hebelarm 7 erstreckt sich von dem Befestigungsabschnitt 8 über ein Befestigungsgelenk 25, an dem der Hebelarm 7 drehbeweglich an der Lenksäule 3 befestigt ist, insbesondere in dem Knickabschnitt 10, bis in das rahmenseitige Ende eines Säulenabschnitts 9, an dem am ersten Ende 22 der Lenker 26 montiert ist. An dem dem Lenker 26 zugewandten Ende des Hebelarms 7 ist ein Drück-Knopf 27 ausgebildet, welcher von außen vom Benutzer bedienbar ist. Bis auf die Rastnase 19 und den Drück-Knopf 27 sind sämtliche Teile des Hebelarms 7 im Inneren der Lenksäule 3 angeordnet, insbesondere von außen nicht sichtbar. Der Drück-Knopf 27 steht über das Befestigungsgelenk 25 und die Feder 24 mit der Rastnase 19 in Wirkverbindung. Insbesondere ist der Hebelarm 7 über das Befestigungsgelenk 25 derart an der Lenksäule 3 drehbeweglich befestigt, dass ein Drücken des Drück-Knopfs 27 in Richtung D, also radial nach innen in die Lenksäule 3, ein Zurückziehen der Rastnase 19 entgegen der Kraft der Feder 24 in das Innere der Lenksäule 3 bewirkt. Dadurch kann die erste Formschlussverbindung 11 in besonders einfacher Weise gelöst bzw. entriegelt werden, und ein Bewegen der Lenksäule 3 in axialer Richtung A freigegeben werden. Das Drücken bzw. der Zustand des gedrückten Drück-Knopfs 27 ist in Figur 3 gezeigt. Hier ist erkennbar, dass die Rastnase 19 soweit entgegen der Kraft der Feder 24 zurückgezogen werden kann, bis die Spitze der Rastnase 19 gleich mit oder hinter der Außenkontur 15a der Lenksäule 3 angeordnet ist, so dass ein Herausziehen der Lenksäule 3, insbesondere des Befestigungsabschnitts 8 aus der Einsteckhülse 6 ermöglicht ist. Die Lenksäule 3 wird in einem nächsten Schritt in Richtung A aus der Einsteckhülse 6 vollständig herausgezogen.

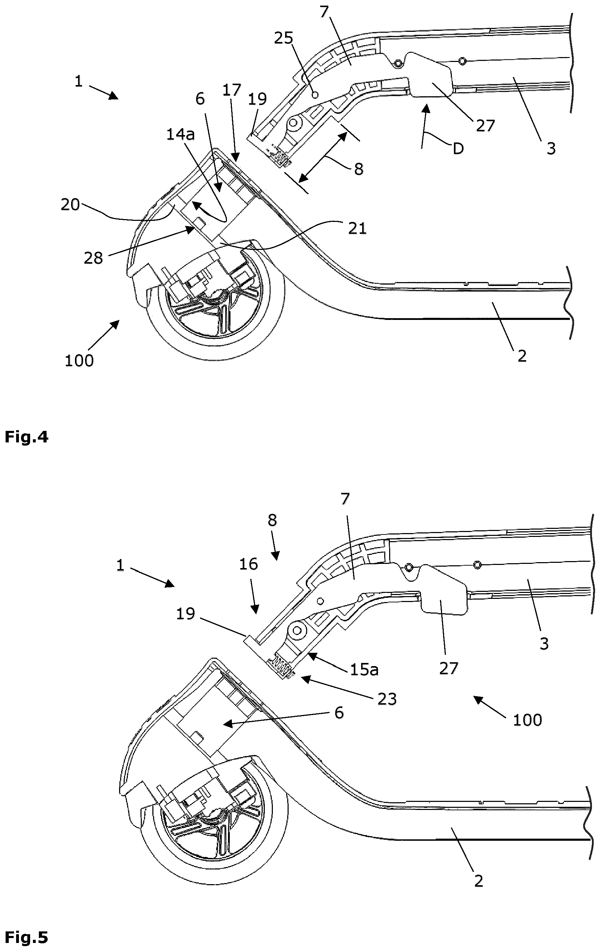

Nach dem vollständigen Herausziehen der Lenksäule 3, insbesondere des Befestigungsabschnitts 8 aus der Einsteckhülse 6 des Rahmens 2, liegen, wie in Figur 4 gezeigt, zwei separate Teile 2, 3 vor. Der Drück-Knopf 27 kann nun wieder losgelassen werden, wodurch sowohl der Drück-Knopf 27 als auch die Rastnase 19 durch die Kraft der Feder 24 wieder nach radial außen vorgetrieben werden, welches in Figur 5 gezeigt ist. Die beiden separaten Teile 2, 3 können nun beispielsweise zum Zwecke des besonderen Platzsparens separat verstaut oder gelagert werden.

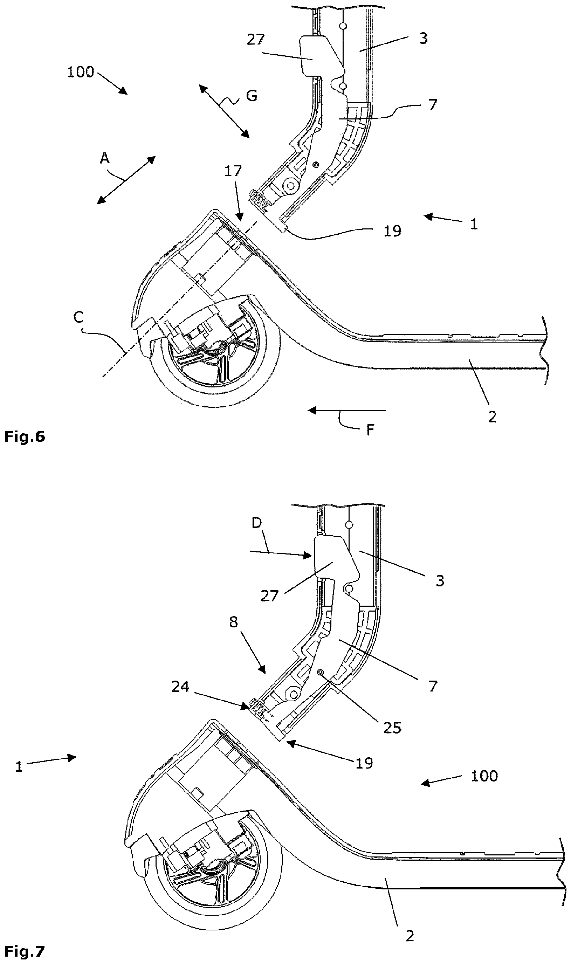

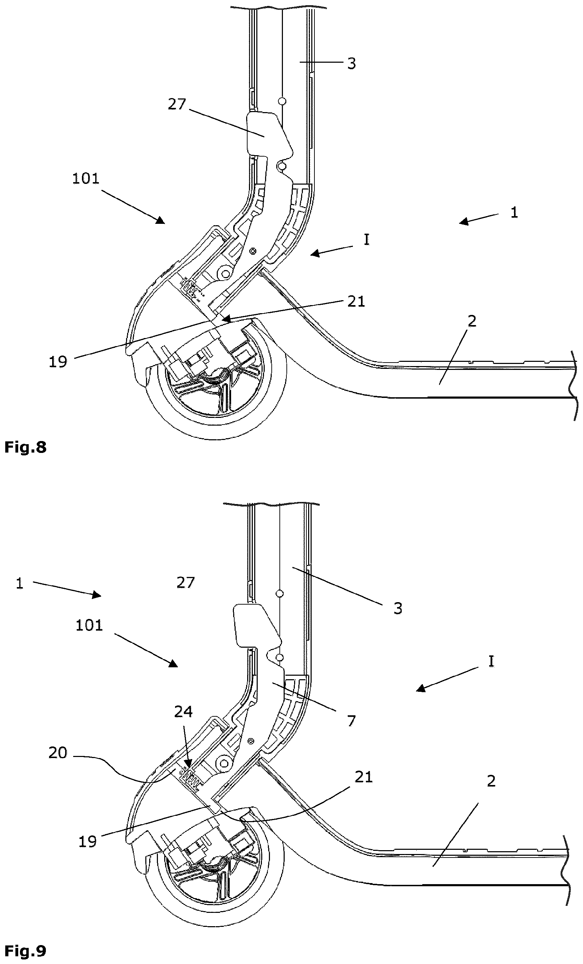

Zum Umbauen des Tretrollers 1 in den Benutzungs-Zustand 101 wird die Lenksäule 3 um die Längsachse C in einem Winkel von etwa 180° verdreht bis die Lenksäule 3 in eine Position gelangt, wie es in Figur 6 gezeigt ist. Die Lenksäule 3 erstreckt sich hierbei im Wesentlichen senkrecht zur Standfläche 4 in Richtung weg vom Rahmen 2. Wird nun der Drück-Knopf 27 erneut gedrückt, wird die Rastnase 19 wieder zurückgezogen, wie es in Figur 7 gezeigt ist. Die Lenksäule 3 kann nunmehr mit dem Befestigungsabschnitt 8 wieder in die Einsteckhülse 6 eingeschoben werden, wie es in Figur 8 gezeigt ist. Ist der Befestigungsabschnitt 8 vollständig in die Einsteckhülse 6 eingeschoben und der Drück-Knopf 27 nicht mehr gedrückt, rastet die Rastnase 19 automatisch in eine in der Einsteckhülse 6 ausgebildete zweite Aussparung 21 ein und arretiert somit die Lenksäule 3 an dem Rahmen 2. Dies ist in Figur 9 gezeigt. Die Lenksäule 3 befindet sich nunmehr in der ersten Position I, in welcher der Benutzungs-Zustand 101 zum Fahren des Rollers 1 hergestellt ist.

Es sollte selbstverständlich sein, dass die oben beschriebene Vorgehensweise in gleicherweise zum Umbauen des Tretrollers 1 aus dem Benutzungs-Zustand 101 in den Transport-Zustand 102 erfolgt, insbesondere in den Schritten mit Reihenfolge der Figuren 9 bis 2.

Wir in Figur 10 im Detail gezeigt ist, befindet sich am äußeren Ende 23 der Lenksäule 3 die aus dem Inneren herausstehende Rastnase 19. In diesem Beispiel dient die Rastnase 19 im Wesentlichen ausschließlich zum Blockieren einer Bewegung der Lenksäule 3 in axialer Richtung A. Je nach Ausrichtung der Lenksäule 3 für den Benutzungs-Zustand 101 oder den Transport-Zustand 102 kann mittels der Rastnase 19 und der ersten Aussparung 20 die erste Formschlussverbindung 11 oder mittels der Rastnase 19 und der zweiten Aussparung 21 die zweite Formschlussverbindung 12 hergestellt werden.

Zur Vermeidung eines Verdrehens der Lenksäule 3 im montierten Zustand, das heißt im Benutzungs-Zustand 101 und im Transport-Zustand 102, sowie als weitere Schlüsselfläche ist zusätzlich an dem zweiten Ende 23 eine Vertiefung 28 an der Außenkontur 15a des Befestigungsabschnitts 8 ausgebildet, mit der die Lenksäule im montierten Zustand 101, 102 in eine an dem Rahmen 2 ausgebildeten, in Figur 11 gut erkennbaren, Erhöhung 29 in Eingriff gelangt. Die Vertiefung 28 und die Erhöhung 29 bilden dadurch im montierten Zustand 101, 102 eine dritte Formschlussverbindung 13. Die dritte Formschlussverbindung 13 dient im montierten Zustand 101, 102 zum Blockieren eines Verdrehens der Lenksäule 3 in Umfangsrichtung B.

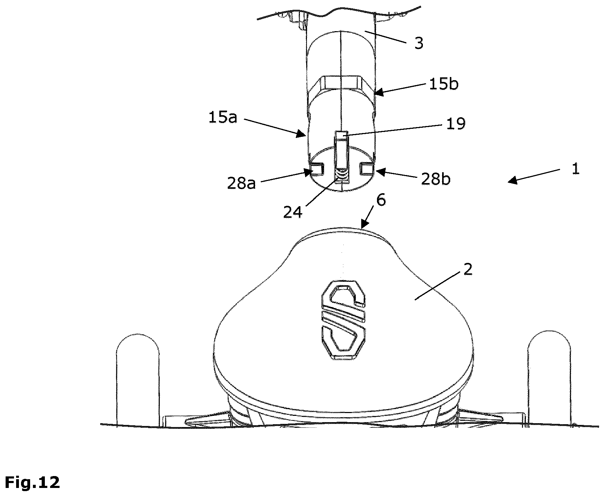

Wie weiter in den Figuren 10 und 12 besonders gut erkennbar ist, umfasst vorliegend der Befestigungsabschnitt 8 eine erste Außenkontur 15a und eine zweite Außenkontur 15b. Die beiden Außenkonturen 15a, 15b sind in axialer Richtung A benachbart zueinander ausgebildet. Die erste Außenkontur 15a ist zylindrisch ausgebildet, die zweite Außenkontur 15b als unregelmäßiger Außen-Achtkant. Die dem distalen Ende 23 zugewandte erste Außenkontur 15a steht dabei vorteilhafterweise der zweiten Außenkontur 15b nicht hervor bzw. ist zurückliegend ausgebildet. Entsprechend weist die Einsteckhülse 6 einen ersten axialen Abschnitt mit einer ersten Querschnittsform 14a und einen benachbart dazu angeordneten zweiten axialen Abschnitt mit einer zweiten Querschnittsform 14b. Die erste Querschnittsform 14a ist hierbei rund - und korrespondierend zur Außenkontur 15a - ausgebildet, die zweite Querschnittsform 14b als unregelmäßiger Innen-Achtkant - und korrespondierend zur Außenkontur 15b. Die erste Außenkontur 15a und die erste Querschnittsform 14a sowie die zweite Außenkontur 15b als und die zweite Querschnittsform 14b bilden entsprechend jeweils eine zueinander korrespondierende Schlüssel- und/oder Formschlussflächen. Die Schlüsselfläche kann dazu dienen ein Einsetzen der Lenksäule 3 ausschließlich in die erste Position I und in die zweite Position II zuzulassen und ein verdrehtes oder falsche Einsetzen zu blockieren. Die zwischen der zweiten Außenkontur 15b und der zweiten Querschnittsform 14b gezeigte vierte Formschlussverbindung 14 dient insbesondere zur Kraftübertragung, insbesondere in Umfangsrichtung B.

Es sollte deutlich sein, dass der Schutzbereich der vorliegenden Erfindung nicht auf das beschriebene Ausführungsbeispiel begrenzt ist. Insbesondere der Aufbau des Tretrollers kann - ohne den Kern der Erfindung zu verändern - durchaus modifiziert sein.

### Bezugszeichenliste:

- 1: Tretroller
- 2: Rahmen
- 3: Lenksäule
- 4: Trittfläche, Standfläche
- 5a: Handgriff
- 5b: Handgriff
- 6: Einsteckhülse
- 7: Hebelarm
- 8: Befestigungsabschnitt
- 9: Säulenabschnitt
- 10: Knickabschnitt
- 11: erste Formschlussverbindung
- 12: zweite Formschlussverbindung
- 13: dritte Formschlussverbindung
- 14: vierte Formschlussverbindung
- 14a: Querschnitt Einsteckhülse
- 14b: Querschnitt Einsteckhülse
- 15a: Außenkontor Lenksäule
- 15b: Außenkontor Lenksäule
- 16: Befestigungsmittel
- 17: Öffnung Einsteckhülse
- 18a: Rad
- 18b: Rad
- 18c: Rad
- 19: Rastnase
- 20: Aussparung
- 21: Aussparung
- 22: erstes Ende
- 23: zweites Ende
- 24: Vorspannelement, Feder
- 25: Befestigungsgelenk
- 26: Lenkstange, Lenker
- 27: Drück-Knopf
- 28: Vertiefung
- 29: Erhöhung
- 30: Lenkmechanik

- 100: Umbau-Zustand
- 101: Benutzungszustand
- 102: Transportzustand

- I: erste Position
- II: zweite Position

- A: axialer Richtung
- B: rotatorische Richtung, Umfangsrichtung
- C: Längsachse
- D: Drücken
- E: Ebene
- F: Fahrtrichtung
- G: radiale Richtung

## Patentansprüche

1. Verfahren zum Umbauen eines Tretrollers (1) zwischen einem Benutzungs-Zustand (101), in welchem der Tretroller (1) fahrbereit ist, und einem Transport-Zustand (102), in welchem der Tretroller (1) platzsparend verstaubar ist, wobei der Tretroller (1) einen eine Standfläche (4) aufweisenden Rahmen (2) und eine einen Handgriff (5a, 5b) aufweisende Lenksäule (3) aufweist, mit den folgenden Schritten:
- Entriegeln einer zwischen der Lenksäule (3) und dem Rahmen (2) herleitbaren ersten Formschlussverbindung (11), welche die Lenksäule (3) gegenüber dem Rahmen (2) gegen ein Bewegen zumindest in axialer Richtung (A) blockiert,
- Herausführen und vollständiges Entnehmen der Lenksäule (3) von dem Rahmen (2),
- Verdrehen der Lenksäule (3) in einem Winkel von 180° in Umfangsrichtung (B),
- Einführen der Lenksäule (3) in eine am Rahmen (2) ausgebildete Einsteckhülse (6) und
- Verriegeln einer zwischen der Lenksäule (3) und dem Rahmen (2) herleitbaren zweiten Formschlussverbindung (12).

2. Verfahren nach Anspruch 1, **dadurch gekennzeichnet, dass** das Entriegeln der Lenksäule (3) von dem Rahmen (2) durch ein Drücken (D) eines sich durch zumindest einen Befestigungsabschnitt (8) der Lenksäule (3) erstreckenden Hebelarms (7) unter gleichzeitigem Zurückziehen einer in einer Aussparung (20, 21) des Rahmens (2) eingreifenden Rastnase (19) erfolgt.

3. Verfahren nach einem der Ansprüche 1 oder 2, **dadurch gekennzeichnet, dass** bei dem Verdrehen der Lenksäule (3) die Lenksäule (3) und der Rahmen (2) berührungslos zueinander angeordnet sind.

4. Verfahren nach einem der voranstehenden Ansprüche, **dadurch gekennzeichnet, dass** beim Einführen der Lenksäule (3) in die Einsteckhülse (6) eine umfangsseitige dritte Formschlussverbindung (13) und/oder vierte Formschlussverbindung (14), insbesondere durch einen konturierten Querschnitt (14a, 14b) der Einsteckhülse (6) und einer dazu korrespondieren ausgebildeten Außenkontur (15a, 15b) der Lenksäule (3), hergestellt wird.

5. Tretroller (1), bevorzugt zum Durchführen eines Verfahrens mit den Merkmalen nach einem der Ansprüche 1 bis 4, mit einem eine Standfläche (4) aufweisenden Rahmen (2) und einer einen Handgriff (5a, 5b) aufweisenden Lenksäule (3), wobei die Lenksäule (3) Befestigungsmittel (16) zum Arretieren der Lenksäule (3) an dem Rahmen (2) in mindestens einer ersten Position (I) und einer zweiten Position (II) aufweist, **dadurch gekennzeichnet, dass** zum Überführen der Lenksäule (3) von der ersten Position (I) in die zweite Position (II) Lenksäule (3) von dem Rahmen (2) vollständig abnehmbar ist.

6. Tretroller (1) nach Anspruch 5, **dadurch gekennzeichnet, dass** der Tretroller (1) sich bei Anordnung der Lenksäule (3) an dem Rahmen (2) in der ersten Position (I) in einem Benutzungs-Zustand (101), in welchem der Tretroller (1) fahrbereit ist, und bei Anordnung der Lenksäule (3) an dem Rahmen (2) in der zweiten Position (II) in einem Transport-Zustand (102), in welchem der Tretroller (1) platzsparend verstaubar ist, befindet.

7. Tretroller (1) nach einem der Ansprüche 5 oder 6, **dadurch gekennzeichnet, dass** die Lenksäule (3) in der ersten Position (I) und in der zweiten Position (II) formschlüssig mit dem Rahmen (2) verbunden ist, insbesondere mittels einer axialen, radialen und umfangsseitigen Formschlussverbindung (11, 12, 13, 14).

8. Tretroller (1) nach einem der Ansprüche 5 bis 7, **dadurch gekennzeichnet, dass** der Rahmen (2) eine Einsteckhülse (6) zur Aufnahme zumindest eines axialen Befestigungsabschnitts (8) der Lenksäule (3) aufweist, und die Lenksäule (3) sowohl in der ersten Position (I) als auch in der zweiten Position (II) mit dem Befestigungsabschnitt (8) in der Einsteckhülse (6) angeordnet ist.

9. Tretroller (1) nach Anspruch 8, **dadurch gekennzeichnet, dass** die Einsteckhülse (6) einen runden und/oder eckigen Querschnitt (14a, 14b) aufweist, und die Lenksäule (3) zumindest in einem in die Einsteckhülse (6) einsteckbaren axialen Befestigungsabschnitt (8) mindestens eine zu dem Querschnitt (14a, 14b) korrespondierende Außenkontur (15a, 15b) aufweist.

10. Tretroller (1) nach einem der Ansprüche 5 bis 9, **dadurch gekennzeichnet, dass** die Einsteckhülse (6) über ihre Längserstreckung mindestens zwei unterschiedlich ausgebildete Querschnitte (14a, 14b) und die Lenksäule (3) über ihren axialen Befestigungsabschnitt (8) mindestens zwei unterschiedliche, mit den Querschnitten (14a, 14b) korrespondierende Außenkonturen (15a, 15b) aufweist.

11. Tretroller (1) nach einem der Ansprüche 5 bis 10, **dadurch gekennzeichnet, dass** die Einsteckhülse (6) eine Öffnung (17) aufweist, welche in einer Ebene (E) angeordnet ist, die zu der Standfläche (4) in einem Winkel von etwa 45° angeordnet ist.

12. Tretroller (1) nach einem der Ansprüche 5 bis 11, **dadurch gekennzeichnet, dass** das Befestigungsmittel (16) einen Hebelarm (7) umfasst, welcher sich im Inneren der Lenksäule (3) über mindestens die Länge eines axialen Befestigungsabschnitts (8) der Lenksäule (3) erstreckt, welcher sich sowohl im Benutzungszustand (101) als auch im Transportzustand (102) in einer Einsteckhülse (6) des Rahmens (2) befindet.

13. Tretroller (1) nach einem der Ansprüche 5 bis 12, **dadurch gekennzeichnet, dass** das Befestigungsmittel (16) eine Rastnase (19) aufweist, welche zum Arretieren der Lenksäule (3) an dem Rahmen (2) in eine an dem Rahmen (2) ausgebildete, korrespondierende Aussparung (20, 21) in Eingriff bringbar ist.

14. Tretroller (1) nach einem der Ansprüche 5 bis 13, **dadurch gekennzeichnet, dass** das Befestigungsmittel (16), insbesondere die Rastnase (19), mittels eines Vorspannelements (24), insbesondere einer Feder, vorgespannt ist, insbesondere in Richtung (G) radial weg von der Lenksäule (3).

15. Tretroller (1) nach einem der Ansprüche 5 bis 14, **dadurch gekennzeichnet, dass** die Lenksäule (3) einen dem Handgriff (5a, 5b) zugewandten Säulenabschnitt (9) aufweist, welcher in Längserstreckung gegenüber dem Befestigungsabschnitt (8) in einem Winkel von etwa 45° angeordnet ist.

16. Tretroller (1) nach einem der Ansprüche 5 bis 15, **dadurch gekennzeichnet, dass** die Lenksäule (3) zwischen einem dem Handgriff (5a, 5b) zugewandten Säulenabschnitt (9) und dem Befestigungsabschnitt (8) einen Knickabschnitt (10) aufweist, und sich das Befestigungsmittel (16) über mindestens die Länge des Knickabschnitts (10) erstreckt.
